# EUROPÄISCHE PATENTSCHRIFT

(11) **EP 1 281 872 B1**
(45) Veröffentlichungstag und Bekanntmachung des Hinweises auf die Patenterteilung: **29.06.2005**
(21) Anmeldenummer: 02016448.9
(22) Anmeldetag: 23.07.2002
(51) Int. Cl.: F15B 11/042, F15B 11/044, F15B 13/04, F15B 21/08, A01B 63/10

(54) **Elektrohydraulische Einrichtung zur Steuerung eines doppelt wirkenden Motors**
Electrohydraulic device for controlling a double acting engine
Dispositif electro-hydraulique pour le contrôle d'un moteur à double effet

(30) Priorität: 04.08.2001 DE 10138389
(43) Veröffentlichungstag der Anmeldung: 05.02.2003
(73) Patentinhaber: ROBERT BOSCH GMBH, 70442 Stuttgart (DE)
(72) Erfinder: Harms, Hans-Heinrich, Prof.Dr., 38300 Wolfenbüttel (DE); Jessen, Sönke, 49406 Barnestorf (DE)
(74) Vertreter: Thürer, Andreas

(56) Entgegenhaltungen:
- EP-B- 0 809 737
- DE-C- 4 122 164
- US-A- 5 218 820
- "Elektronisch-hydraulische Hubwerksregelung für Traktoren 5/7" BOSCH AUTOMATION, 30. September 1999 (1999-09-30), XP001197129

## Beschreibung

Die Erfindung geht aus von einem elektrohydraulischen Hubwerk, das die Merkmale aus dem Oberbegriff des Patentanspruchs aufweist.

Ein solches elektrohydraulisches Hubwerk ist zum Beispiel aus der Broschüre 1 987 760 507 AKY 005/7 De/En/Fr 9.99 AT/PLM der Anmelderin mit dem Titel "Elektronischhydraulische Hubwerksregelung für Traktoren", Seiten 10, 11 und 50 bekannt. Der Hydrozylinder ist einfach wirkend mit nur einem Druckraum ausgebildet und erlaubt deshalb nur die Betriebsfälle Heben und Senken. Entsprechend hat das Regelventil einen Steuerschieber, der aus einer Neutralstellung heraus nach zwei entgegengesetzten Richtungen auslenkbar ist und der eine erste Steuerkante, mit der ein Durchflußquerschnitt für einen von der Pumpe über das Regelventil dem Druckraum des Hydrozylinders zufließende Druckmittelstrom steuerbar ist, und eine zweite Steuerkante besitzt, mit der ein Durchflußquerschnitt für einen aus dem Druckraum ablaufenden Druckmittelstrom steuerbar ist. Nach unten Drücken und nach oben Nachgeben ist bei diesem Hubwerk nicht möglich.

Aus der DE 41 22 164 C1 ist allgemein schon ein hydraulisches System mit einer Pumpe, einem Regelventil und einem doppelt wirkend mit zwei Druckräumen ausgebildeten Hydrozylinder bekannt. Bei diesem bekannten hydraulischen System wird im Betrieb festgestellt, ob der Hydrozylinder von der Last angetrieben wird, also eine negative Last vorliegt, um Fehlsteuerungen am Proportionalventil bzw. an der Pumpensteuerung zu vermeiden. Anhand des Signals eines Lagesensors, der die Position des Schließglieds eines Wechselventils erfaßt, das mit den Drücken in beiden Zylinderleitungen beaufschlagt ist, und anhand des Richtungssignals des Sollwertgebers für das Proportionalventil wird durch eine Elektronik festgestellt, ob ein Betriebsfall mit positiver oder negativer Last vorliegt. In einer ersten Ausführungsform, bei der in einem System mit LS-Technik und zwei doppelt wirkenden hydraulischen Verbrauchern jedem Proportionalventil eine hydraulische Druckwaage vorgeschaltet ist, kann die Elektronik das Signal des Sollwertgebers zum Ansteuern des Proportionalventils nicht beeinflussen; hier soll vielmehr das druckabhängige Signal des hydraulischen Verbrauchers mit negativer Last beim Verarbeiten der Steuersignale unberücksichtigt bleiben. Bei einer zweiten Ausführungsform, bei der die Proportionalventile jeweils in einem unterlagerten Lageregelkreis betrieben werden und anstelle einer hydraulischen Druckwaage mit einer elektronischen Druckkompensation ausgestattet sind, wird zwar das Signal des Sollwertgebers der Elektronik zugeführt, die das Ausgangssignal zum Ansteuern des jeweiligen Proportionalventils bildet; dabei wird jedoch nur in einem Ventilregler eine Kennfeldkorrektur vorgenommen, um auf diese Weise eine elektronische Lastkompensation zu erreichen. Eine befriedigende und sichere Steuerung eines doppelt wirkenden hydraulischen Verbrauchers in einem Vier-Quadrantenbetrieb mit positiven und negativen Lasten in beiden Bewegungsrichtungen ist mit diesem System kaum erreichbar. Auch gibt die DE 41 22 164 C1 keine Hinweise auf eine Einbindung des doppelt wirkenden hydraulischen Verbrauchers in ein elektrohydraulisches Hubwerk. Auch ist die Ermittlung der Zylinderleitung, in der der höhere Druck herrscht, mit Hilfe eines hydraulischen Wechselventils und einer elektromagnetischen Lageabfrage relativ aufwendig und störanfällig.

Auch aus der US-A-5 218 820 ist allgemein schon ein elektrohydraulisches System bekannt, bei dem mit einem Regelventil ein doppelt wirkender Hydrozylinder mit zwei Druckräumen in einem Vier-Quadrantenbetrieb mit positiven und negativen Lasten in beiden Bewegungsrichtungen gesteuert werden kann. Dazu ist zunächst ein Sollwertgeber für die gewünschte Geschwindigkeit und die gewünschte Richtung der Bewegung des Hydrozylinders vorhanden. Mit zwei Drucksensoren werden die Drücke in den beiden Druckräumen des Hydrozylinders erfaßt. Elektronische Steuermittel bestimmen unter Heranziehung der erfassten Drücke und der Kolbenflächen, an denen die Drücke wirken, eine Nettokraft und wählen aufgrund der Nettokraft und der vorgegebenen Richtung die Steuerkante aus, mit der die gewünschte Durchflußmenge zum oder vom Hydrozylinder gesteuert werden kann. Das Regelventil ist gemäß einer sogenannten Drosselsteuerung mit einer offenen Mitte und Umlaufkanal ausgebildet, so dass bei einer Lageänderung der Steuerkanten, über die eine zu oder aus einem Druckraum des Hydrozylinders fließende Druckmittelmenge strömt, auch der Durchflußquerschnitt im Umlaufkanal beeinflußt wird. Die Steuerung des Regelventils und damit die elektronischen Steuermittel sind deshalb äußerst komplex.

Aus der DE 40 28 887 A 1 ist eine hydraulische Steuereinrichtung mit einem doppelt wirkenden Hydrozylinder bekannt, die zur Betätigung eines Hubwerks an einem Traktor vorgesehen ist. Hier können neben den Funktionen Heben, Neutral und Senken auch die Funktionen Drücken und Freigang gesteuert werden, wobei für die Funktion Freigang, die in der Schaltstellung für Senken zusätzlich angeordnet ist, ein zusätzliches 2/2-Magnetventil geschaltet werden muss und für die Funktion Drücken das Regelventil eine eigene vierte Schaltstellung benötigt. Diese Steuereinrichtung baut vor allem auch durch das zusätzliche Magnetventil relativ aufwendig und kostspielig und ist für einen Vier-Quadrantenbetrieb im Regelkreis nicht optimal geeignet.

Ferner ist aus der EP 0 043 725 B 1 eine elektrohydraulische Regeleinrichtung für ein Hubwerk an einem Traktor bekannt, die sich für verschiedene Regelungsarten wie z.B. Lageregelung, Zugkraftregelung oder Mischregelung eignet und dabei mit einem einfach wirkenden Hydrozylinder arbeitet, so dass nur die üblichen Funktionen wie Heben, Halten und Senken möglich sind. Eine zusätzliche Funktion für das Hubwerk wie z. B. Drücken ist bei dieser Regeleinrichtung in Folge des einfach wirkenden Hydrozylinders nicht möglich, so dass die Einsatzmöglichkeiten dieser Regeleinrichtung begrenzt sind.

### Vorteile der Erfindung

Das erfindungsgemäße elektrohydraulische Hubwerk mit den Merkmalen aus dem Patentanspruch 1 hat gegenüber den bisher bekannten Hubwerken den Vorteil, dass es in beiden Richtungen bei Lastrichtungswechseln besser steuerbar ist. Der Hydrozylinder kann daher in einem vollen Vier-Quadrantenbetrieb betrieben werden, wodurch neben den Funktionen Heben, Neutral und Senken auch die Funktionen Drücken und Nachgeben durchführbar sind. Für diesen Vier-Quadrantenbetrieb genügt ein einziges Regelventil mit seinen vier Steuerkanten am gleichen Schieber, die je nach Betriebsfall wahlweise aktivierbar sind. Dabei wird mit Hilfe der elektronischen Steuermittel sichergestellt, dass abhängig vom vorliegenden Betriebsfall am Hydrozylinder bezüglich Bewegungsrichtung und Lastrichtung die jeweils zugeordnete Steuerkante ausgewählt und zur Steuerung benutzt wird. Gerade bei elektrohydraulischen Hubwerken an einer landwirtschaftlichen Arbeitsmaschine, das in der Regel mit einfach wirkender Funktion arbeitet und dessen doppelt wirkende Funktion nur gelegentlich benötigt wird, ist die erfindungsgemäße Ausbildung besonders günstig. Dabei ist vorteilhaft, dass hydraulische Regelventile an sich bekannter Bauart einsetzbar sind, wobei die entscheidenden Änderungen vor allem in der Ansteuerung des Regelventils liegen, die mit insbesondere in Digitaltechnik ausgeführten elektronischen Steuermitteln zweckmäßig und kostengünstig realisierbar ist. Durch die Funktion Drücken kann bei einem Hubwerk daher auf vorteilhafte und einfache Weise eine Auflagedruckregelung realisiert werden, wie dies bisher nicht möglich war.

Durch die in den Unteransprüchen aufgeführten Maßnahmen sind vorteilhafte Weiterbildungen und Verbesserungen des im Patentanspruch 1 angegebenen elektrohydraulischen Hubwerks möglich. Besonders vorteilhaft sind Ausführungen nach den Patentansprüchen drei und vier, wonach das Hubwerk zusätzlich in einen Lageregelkreis geschaltet ist. Auf diese Weise kann dann eine Druckregelung durchgeführt werden, wobei der Regler mittels der Lagesignale die Grenzwerte überwacht, innerhalb derer sich die Druckregelung abspielen soll, so dass ein vom Hubwerk getragenes Gerät nicht in unerwünschter Weise wegdriften kann. Zweckmäßig ist auch eine Ausbildung nach Patentanspruch 6, wonach die elektronischen Steuermittel zusätzlich für eine elektrische Lastkompensation ausgelegt sind, da die Drucksignale ohnedies zur Verfügung stehen und sich die Ventilkennlinien für das Regelventil günstig im Regler ablegen lassen. Diese elektronische Lastkompensation ist besonders dafür geeignet, wenn sie für die Ablaufseiten des Regelventils vorgesehen wird. Günstig ist es ferner, wenn gemäß Patentanspruch 7 auf der Zulaufseite des Regelventils eine hydraulische Druckwaage angeordnet ist. Auf diese Weise wird eine relativ kostengünstige und genau arbeitende Lastdruckkompensation möglich. Vorteilhaft ist es ferner, wenn gemäß Patentanspruch 8 das Regelventil in einem unterlagerten Lageregelkreis betrieben wird, vor allem dann, wenn eine elektronische Lastkompensation vorgesehen ist. Günstig ist es ferner, wenn gemäß Patentanspruch 9 eine Schwimmstellung vorgesehen wird, um in besonderen Situationen die Funktion eines einfach wirkenden Hubwerks nachbilden zu können. Weitere vorteilhafte Ausgestaltungen ergeben sich aus den übrigen Ansprüchen, der Beschreibung sowie der Zeichnung.

### Zeichnung

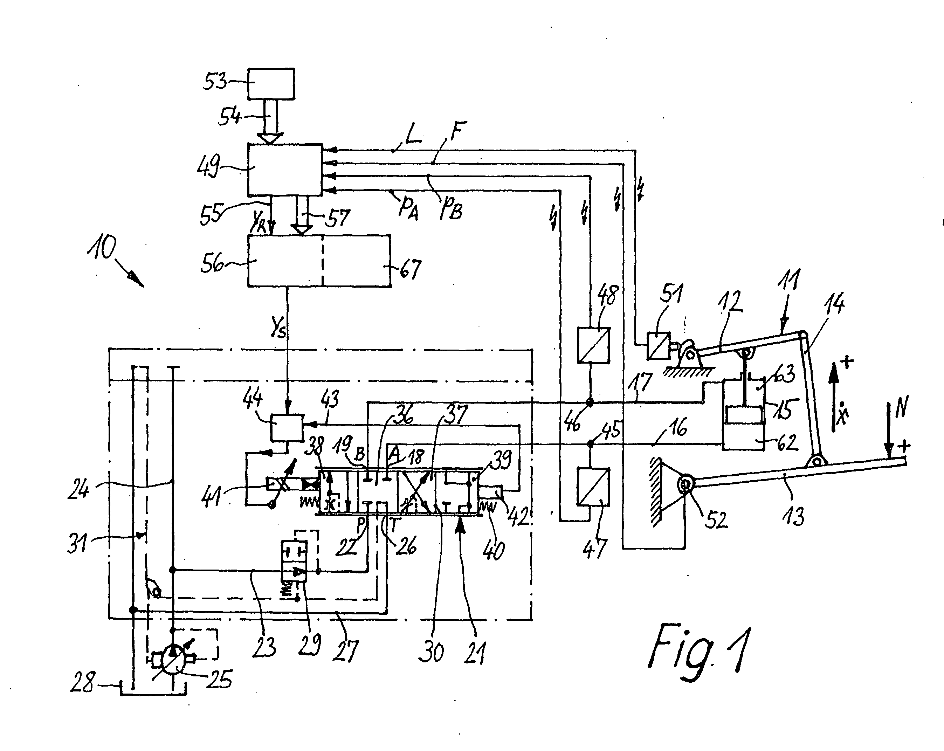

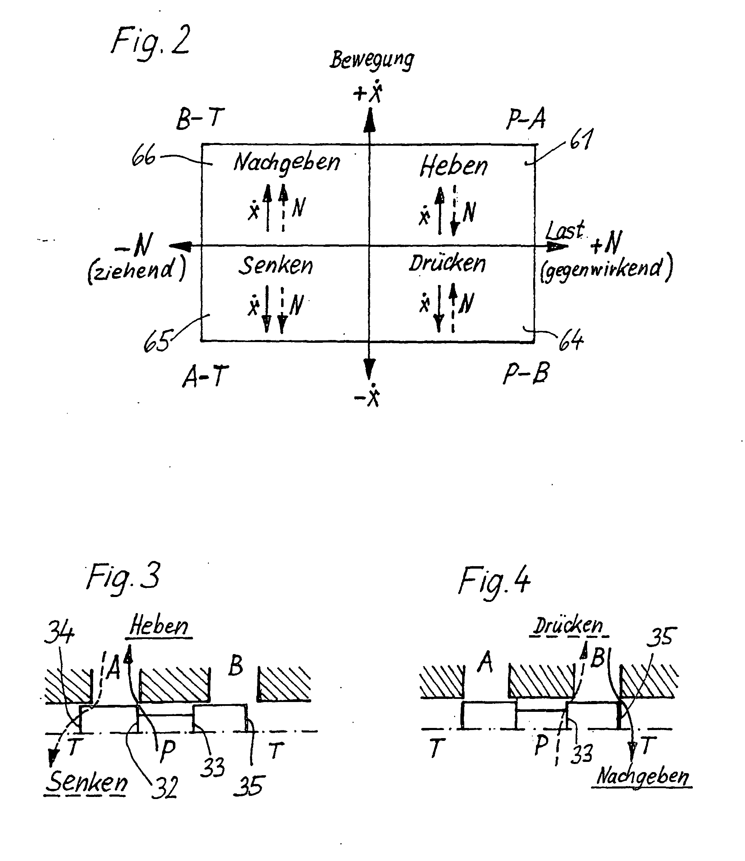

Ein Ausführungsbeispiel der Erfindung ist in der Zeichnung dargestellt und in der nachfolgenden Beschreibung näher erläutert. Es zeigen Figur 1 in stark vereinfachter Ausführungsform ein elektrohydraulisches Hubwerk für einen Traktor, Figur 2 in vereinfachter Form die Zusammenhänge bei einem Vier-Quadrantenbetrieb in Abhängigkeit von Bewegung und Last und die Figuren 3 und 4 rein schematisch die Schieberüberdeckung für unterschiedliche Betriebsfälle für das Regelventil nach Figur 1.

### Beschreibung des Ausführungsbeispiels

Der mechanische Teil 11 des Hubwerks nach Figur 1 ist hier mit Oberlenker 12, Unterlenker 13 und Hubstange 14 als an sich bekanntes Dreipunktgestänge eines Traktors aufgebaut, das von dem doppelt wirkenden Hydrozylinder 15, der auch als Kraftheber bezeichnet wird, betätigbar ist. Im folgenden wird anstelle von Hydrozylinder auch der Ausdruck Motor gebraucht.

Zur Vereinfachung der Beschreibung wird angenommen, dass die Wirkflächen des doppelt wirkenden Hydrozylinders 15 auf der Kolbenbodenseite und der Kolbenstangenseite gleich groß sind. Trifft dieses in Anwendungsfällen nicht zu, sind also die Flächen unterschiedlich, ist anstelle der unbewerteten Drücke P_{A} und P_{B} insbesondere bei Größenvergleich und bei Ermittlung der resultierenden Kraftgröße am Motor eine Bewertung mit den jeweils zugeordneten Wirkflächen durchzuführen.

Zur Steuerung des doppelt wirkenden Hydrozylinders 15 steht dieser über zwei Zylinderleitungen 16,17 mit den mit A und B bezeichneten Verbraucheranschlüssen 18,19 eines proportional arbeitenden Regelventils 21 in Verbindung, dessen mit P bezeichneter Zulaufanschluss 22 über einen Zulaufkanal 23 und eine Zulaufleitung 24 von einer Verstellpumpe 25 mit Druckmittel versorgbar ist. Ein mit T bezeichneter Tankanschluss 26 des Regelventils 21 ist über eine Rücklaufleitung 27 zum Tank 28 entlastet. In dem Zulaufkanal 23 ist dabei dem Regelventil 21 eine hydraulische Druckwaage 29 vorgeschaltet, während das Regelventil 21 in LS-Technik mit geschlossener Neutralstellung ausgebildet ist. Zu diesem Zweck sind das Regelventil 21, die Druckwaage 29 und die Verstellpumpe 25 in an sich bekannter Weise an ein Steuerleitungssystem 31 angeschlossen.

Das Regelventil 21 hat einen Steuerschieber 30 mit mindestens vier Steuerkanten 32 bis 35 und kann von der federzentrierten Neutralstellung 36 nach beiden Seiten hin in Arbeitstellungen 37,38 für Heben (37) und Senken (38) ausgelenkt werden. Zudem ist als vierte Schaltstellung eine Schwimmstellung oder Freigangstellung 39 vorgesehen. Das Regelventil 21 ist vorgesteuert ausgeführt und über einen Doppelhubmagneten 41 aus der von Federn 40 zentrierten Neutralstellung 36 in die Arbeitstellungen 37 bis 39 auslenkbar. Die Lage des Steuerschiebers 30 wird von einem Wegaufnehmer 42 abgegriffen und über einen unterlagerten Lageregelkreis 43 mit Ventilregler 44 ausgeregelt, wobei der Ventilregler 44 von einem Stellsignal y_{S} angesteuert wird.

Die Hubwerks-Regeleinrichtung 10 weist ferner an jeder Motorleitung 16,17 eine Lastdruckfühlstelle 45,46 auf, deren Drücke jeweils von einem elektrohydraulischen Drucksensor 47 bzw. 48 abgefragt werden und deren elektrische Ausgangssignale p_{A} und p_{B} an einen elektronischen Regler 49 gemeldet werden. Ferner werden dem Regler 49 als weitere Istwerte der Regeleinrichtung 10 von einem Sensor 51 die Istwerte der Lage L des Hubwerks 11 sowie von einem Sensor 52 die Istwerte der Kraft F im Unterlenker 13 gemeldet.

Weiterhin werden dem elektronischen Regler 49 von einem Sollwertgeber 53 über eine Wirkverbindung 54 eine Reihe von Sollwerten eingegeben. Zum einen gibt der Sollwertgeber 53 dem Regler 49 normierte Sollwertsignale für die Richtung und für die Größe des zu regelnden Parameters ein. Ferner ist es mit dem Sollwertgeber 53 möglich, die Wahl der Betriebsart festzulegen, wie z.B. eine Lageregelung, eine Kraftregelung, eine Druckregelung, eine Differenzdruckregelung, eine Auflagedruckregelung, eine Mischregelung etc. In dem Regler 49 wird nun, abhängig von den Eingangssignalen und der gewählten Betriebsart, eine Regelabweichung y_{R} gebildet, welche über die Wirkverbindung 55 einer elektronischen Steuereinrichtung 56 zugeführt wird.

In diese elektronische Steuereinrichtung 56 werden zusätzlich aus dem Regler 49 über eine zusätzliche Wirkverbindung 57 zumindest die Istwerte p_{A} und p_{B} für die in den Motorleitungen 16, 17 abgegriffenen Drücke sowie das Richtungssignal für das Regelventil 21 weitergegeben. Diese durchgeschleiften Signale werden in der Steuereinrichtung 56 dahingehend bearbeitet und verglichen, dass die elektronische Steuereinrichtung 56 daraus erkennt, welcher Betriebsfall beim Betätigen des doppelt wirkenden Motors 15 gerade vorliegt, nämlich, ob eine positive oder eine negative Last vorhanden ist, wobei diese Ermittlungen für beide Bewegungsrichtungen des doppelt wirkenden Motors 15 vorgenommen werden. Auf diese Weise erkennt die Steuereinrichtung 56 in einem Vier-Quadrantenbetrieb den jeweils vorliegenden Betriebsfall und wird abhängig davon die eingehende Regelabweichung y_{R} so korrigieren, dass ein abgehendes Stellsignal y_{S} erzeugt wird, mit dem der Ventilregler 44 im unterlagerten Lageregelkreis dann angesteuert wird, um davon abhängig das Regelventil 21 im Sinne einer Verringerung der Regelabweichung Y_{R} zu steuern.

Die Wirkungsweise der Hubwerks-Regeleinrichtung 10 wird wie folgt erläutert, wobei zugleich auf die Figuren 2,3 und 4 Bezug genommen wird, von denen Figur 2 schematisch den Vier-Quadrantenbetrieb des doppelt wirkenden Motors 15 abhängig von der Bewegungsrichtung *x* und der Last N aufzeigt, während die Figuren 3 und 4 rein schematisch verschiedene Steuerkantenstellungen des Regelventils 21 veranschaulichen. Wie ferner Figur 1 näher zeigt, wird dabei die Bewegungsrichtung *x* des doppelt wirkenden Motors 15 nach oben und damit auch das Heben des Hubwerks 11 als positive Bewegung aufgefaßt, wobei die entgegengerichtete Belastung N nach unten als normal und somit als positiv bezeichnet wird; der Bewegungsrichtung entgegengerichtete Belastungen werden also als positiv (gegenwirkende Last) und mit der Bewegungsrichtung gleichgerichtete Belastungen werden als negativ (ziehende Last) aufgefaßt, was für beide Bewegungsrichtungen des doppelt wirkenden Motors 15 gilt.

Es sei nun davon ausgegangen, dass das Hubwerk 11 im Normalfall im ersten Quadranten 61 für Heben arbeitet, wobei die Bewegungsrichtung *x* des Motors 15 nach oben und somit entgegen der Richtung der Last N nach unten gerichtet ist, also eine positive Last vorliegt. Beim Heben werden vom Sollwertgeber 53 dem elektronischen Regler 49 nach Größe und nach Richtung bestimmte normierte Sollwertsignale vorgegeben. Der Regler 49 bildet daraus je nach gewählter Regelungsart und den gemeldeten Istwerten von Lage L, Kraft F oder Drücken p_{A}, p_{B} eine Regelabweichung y_{R} , die er an die elektronische Steuereinrichtung 56 weitergibt. In diese Steuereinrichtung 56 werden ferner über die Wirkverbindung 57 zusätzlich zumindest die Istwertsignale für beide Drücke p_{A}, p_{B} sowie das Richtungssignal des Sollwertgebers 53 für das Regelwegeventil 21 durchgeschleift. Aus einem Vergleich beider Drücke p_{A} und p_{B} ermittelt die Steuereinrichtung 56, dass beim Heben der höhere Druck p_{A} in der ersten Motorleitung 16 herrscht. Aus dem Richtungssignal, wonach das Regelventil 21 aus der Neutralstellung 36 in die erste Arbeitsstellung 37 für Heben verschoben wird, erkennt die elektronische Steuereinrichtung 56, dass der höhere Druck p_{A} auf der Zuflußseite liegt, wobei Druckmittel über das Regelventil 21 zum Kolbenraum 62 gesteuert wird, während vom Ringraum 63 des doppelt wirkenden Motors 15 Druckmittel über die zweite Motorleitung 17, das Regelventil 21 und die Rücklaufleitung 27 zum Tank 28 abströmt. Die elektronische Steuereinrichtung 56 leitet aus dem Vergleich dieser Signale ab, dass ein normaler Betriebsfall Heben mit positiver Last vorliegt, also der Betriebsfall im ersten Quadranten 61 nach Figur 2, und korrigiert dabei das Stellsignal y_{S} zur Ansteuerung des Regelventils 21 derart, dass die dem Heben zugeordnete erste Steuerkante 32 aktiviert wird. Der im Regelventil 21 mit positiver Überdeckung ausgestattete Steuerschieber 30 wird dabei sprunghaft in seine Ausgangsstellung gesteuert, wie dies Figur 3 vereinfacht näher zeigt, aus der heraus dann eine proportionale Auslenkung des Steuerschiebers 30 erfolgt, um den Druckmittelstrom beim Heben (durchgezogener Pfeil von P nach A in Figur 3) zum Kolbenraum 62 zu steuern. Die Drosselung des Druckmittelstroms findet somit durch die erste Steuerkante 32 auf der Zulaufseite statt, während der vom Motor 15 abfließende Strom ungehindert über die geöffnete, vierte Steuerkante 35 von B nach T abströmen kann.

Der Steuerschieber 30 arbeitet dabei in einem unterlagerten Lageregelkreis 43, wobei der Wegaufnehmer 42 den Lage-Istwert ermittelt und dem Ventilregler 44 zuführt. Der Steuerschieber 30 wird dabei gegen die Kraft zentrierender Federn 40 von einem Doppelhubmagneten 41 indirekt betätigt, der über eine hydraulische Vorsteuerstufe auf den Steuerschieber 30 arbeitet. Insgesamt läßt sich damit eine genaue und schnelle Regelung des Steuerschiebers 30 bei niedrigem Energieaufwand erreichen. Beim Heben ist ferner die Druckwaage 29 wirksam, die im Zulaufkanal 23 dem Regelventil 31 vorgeschaltet ist und über welche der zu steuernde Druckmittelstrom geführt wird, so dass für eine hydraulische Lastkompensation beim Heben gesorgt ist.

Soll nun das Hubwerk 11 normal gesenkt werden, so ist die Bewegungsrichtung *x* nach unten gerichtet, ebenso die Lastrichtung N, so dass also eine negative Last (also ziehende Lastverhältnisse) vorliegt; der doppelt wirkende Motor 15 arbeitet beim Betriebsfall Senken im dritten Quartal 65 nach Figur 3. Infolge der Lastverhältnisse am Motor 15 herrscht dabei der höhere Druck im Kolbenraum 62 und wird vom ersten Drucksensor 47 an den elektronischen Regler 49 gemeldet, während der zweite Drucksensor 48, der nun auf der Zulaufseite liegt, einen demgegenüber niedrigeren Druck meldet. Entsprechend dem gewünschten Senken am Motor 15 gibt der Sollwertgeber 53 entsprechende Sollwert-Signale vor, wobei das zugeordnete Richtungssignal für eine Auslenkung des Steuerschiebers 30 aus der Neutralstellung 36 in Richtung zweiter Arbeitsstellung 38 für Senken steht.

Die zur elektronischen Steuereinrichtung 56 durchgeschleiften Signale für die Drücke p_{A} und p_{B} sowie das zugehörige Richtungssignal für das Regelventil 21 werden in der Steuereinrichtung 56 verglichen, wobei diese erkennt, dass am Motor 15 eine Abwärtsbewegung bei negativen Lastverhältnissen vorliegt, also das Regelventil 21 im Betriebsfall Senken im dritten Quartal 65 nach Figur 2 arbeitet. Entsprechend diesem Betriebsfall variiert die elektronische Steuereinrichtung 56 die ankommende Regelabweichung y_{R} derart, dass mit dem abgehenden Stellsignal y_{S} die zugehörige dritte Steuerkante 34 ausgewählt und so gesteuert wird, dass eine erforderliche Ablaufdrosselung durchführbar ist. Dabei wird die dritte Steuerkante 34 sprunghaft in eine nicht näher gezeichnete Ausgangsstellung verfahren, aus der heraus die proportionale Drosselung des vom Kolbenraum 62 über den in der zweiten Arbeitsstellung 38 befindlichen Steuerschieber 30 zum Tank 28 hin abfließenden Druckmittelstroms erfolgt. Diese Strömungsrichtung beim Senken ist in Figur 3 vereinfacht durch den gestrichelten Pfeil von A nach T dargestellt, wobei die dritte Steuerkante 34 für die Drosselung auf der Rücklaufseite eingesetzt wird (nicht dargestellt).

Bei diesem Senken im dritten Quartal 65 findet die Drosselung auf der Rücklaufseite statt, so dass die zulaufseitig geschaltete hydraulische Druckwaage 29 unwirksam ist. Da beim Senken in der Regel der volle Lastdruck an der Rücklauf-Steuerkante 34 gedrosselt werden muß und häufig eine lastdruckkompensierte Steuerung erwünscht ist, wird hier eine elektronische Lastkompensation durchgeführt, die relativ günstig in die Regeleinrichtung 10 integrierbar ist. Dazu sind in einem ergänzenden Steuerteil 67 an der elektronischen Steuereinrichtung 56 die Durchflußkennlinien des Regelventils 21 abgelegt, so dass mit Hilfe der ohnedies vorhandenen Lastdrucksignale p_{A} bzw. p_{B} das Stellsignal y_{S} dahingehend verändert werden kann, dass in an sich bekannter Weise eine elektronische Lastkompensation des Druckmittelstroms auf der Rücklaufseite erreicht wird; diese ergänzt bei relativ geringem Aufwand die hydraulische Lastkompensation durch die Druckwaage 29 auf der Zulaufseite.

Soll nun anstelle der Funktion Senken eine Funktion Drücken gefahren werden, so arbeitet das Hubwerk 11 in dem zweiten Quadranten 64 nach Figur 2. Bei der Funktion Drücken führt der doppelt wirkende Motor 15 eine Abwärtsbewegung *x* aus, wobei jedoch die Belastung N dieser Bewegung entgegenwirkt, somit also positive Lastverhältnisse vorliegen. Beim Drücken wird entsprechend der Abwärtsbewegung durch das Richtungssignal des Sollwertgebers 53 das Regelventil 21 auch in seine zweite Arbeitsstellung 38, die auch dem Senken zugeordnet ist, ausgelenkt. Aus den von den Drucksensoren 47,48 zurückgemeldeten Signalen erkennt die Steuereinrichtung 56 jedoch, dass nun der höhere Druck vom zweiten Sollwertgeber 48 gemeldet wird, der den Druck im Ringraum 63 erfaßt. Aus diesen Signalen für die Drücke und aus dem Richtungssignal erkennt die Steuereinrichtung 56 den Betriebsfall Drücken nach dem zweiten Quadrant 64. Dementsprechend korrigiert die Steuereinrichtung 56 das eingehende Signal Regelabweichung y_{R} dahingehend, dass mit dem ausgehenden Stellsignal y_{S} die zweite Steuerkante 33 aktiviert wird. Infolge der positiven Überdeckung am Steuerschieber 30 wird dabei die zweite Steuerkante 33 sprunghaft in ihre Ausgangsstellung verstellt, aus der heraus die proportionale Drosselung im Zulaufstrom von P nach B erfolgt. Beim Drücken strömt Druckmittel unter Druck in die Ringkammer 63, so dass das Hubwerk 11 gegen einen entgegenwirkenden Widerstand N nach unten gedrückt wird. Aus dem unbelasteten Kolbenraum 62 kann Druckmittel ungehindert über die dritte Steuerkante 34 zum Tank abströmen. Bei dieser Funktion Drücken liegt die hydraulische Druckwaage 29 im Zuflußstrom und kann somit für eine hydraulische Lastkompensation wirksam werden. Der Druckmittelstrom beim Drücken ist in Figur 4 vereinfacht durch einen gestrichelten Pfeil von P nach B angezeigt, wobei jedoch der Steuerschieber 30 noch in seiner Neutralstellung dargestellt ist und erst sprunghaft in eine Ausgangsstellung bewegt werden muß, bevor die zweite Steuerkante 33 die Zulaufdrosselung übernehmen kann.

Neben den Funktionen Heben, Senken und Drücken kann der doppelt wirkende Motor 15 auch in einer Funktion Nachgeben arbeiten, wobei das Hubwerk 11 und somit der Motor 15 eine Aufwärtsbewegung ausführen, wobei die Belastung N in gleicher Richtung, also ziehend, wirkt, wie dies in Figur 2 im vierten Quadranten 66 dargestellt ist; es herrschen also negative Lastverhältnisse. Beim Nachgeben wird der Steuerschieber 30 in die erste Arbeitsstellung 37, also wie beim Heben, ausgelenkt, wobei Druckmittel von der Pumpe 25 über die erste Motorleitung 16 zum Kolbenraum 62 gesteuert wird. Durch die in gleicher Richtung wie die Bewegungsrichtung wirkende Last N stellt sich im Ringraum 63 der höhere Druck p_{B} ein, der vom zweiten Drucksensor 48 an den Regler 49 und weiter zur Steuereinrichtung 56 gemeldet wird. Aus den beiden Drucksignalen P_{A} und P_{B} sowie dem Richtungssignal des Sollwertgebers 53 erkennt die elektronische Steuereinrichtung 56 den Betriebsfall Nachgeben und aktiviert dementsprechend die vierte Steuerkante 35, so dass eine Ablaufdrosselung möglich ist. Auch hierbei fährt die vierte Steuerkante 35 sprunghaft ihre Ausgangsstellung an, um anschließend proportional zum vorgegebenen Sollwert den Rücklaufstrom zum Tank 28 zu drosseln. Wie beim Senken ist auch beim Nachgeben infolge der Drosselung auf der Rücklaufseite die hydraulische Druckwaage 29 unwirksam; es wird deshalb wie beim Senken eine elektronische Lastkompensation durchgeführt, wobei die im Steuerteil 67 abgelegten Ventilkennlinien des Regelventils benutzt werden. Der Druckmittelfluß beim Nachgeben ist in Figur 4 vereinfacht durch den ausgezogenen Pfeil von B nach T dargestellt, wobei die vierte Steuerkante 35 die Rücklaufdrosselung übernimmt (die Lage des Steuerschiebers 30 ist in Figur 4 in seiner Neutralstellung 36 dargestellt). Über die geöffnete erste Steuerkante 32 kann dabei Druckmittel von P nach A und weiter in den Kolbenraum 62 nachströmen.

Mit der aufgezeigten Hubwerks-Regeleinrichtung 10 kann somit trotz des Regelventils 21 mit positiver Überdeckung und vier Steuerkanten 32 bis 35 am gleichen Steuerschieber 30 ein voller Vier-Quadrantenbetrieb gesteuert werden, wobei bei positiven Lasten nur die zulaufseitigen, ersten und zweiten Steuerkanten 32,33 und bei negativen Lasten nur die rücklaufseitigen, dritten und vierten Steuerkanten 34,35 aktiv zur Drosselung geschaltet sind. Erreichbar ist dies vor allem durch die elektronische Steuereinrichtung 56 zur Drosselkantenverschiebung, die aus den beiden Lastdrücken P_{A} und p_{B} und dem Richtungssignal den jeweiligen Betriebsfall erkennt und davon abhängig die richtige Steuerkante auswählt und aktiviert. Mit den normierten Signalen des Sollwertgebers 53 können daher neben den Bewegungen Heben und Senken unter Anpassung an den aktuellen Zustand am Hubwerk 11 auch die Bewegungen Drücken und Nachgeben koordiniert angesteuert werden, da alle vier Steuerkanten 32 bis 35 vom Betriebsfall abhängig jeweils frei einstellbar sind, insbesondere durch eine sprunghafte Bewegung in eine zugeordnete Ausgangsstellung.

Die aufgezeigte Hubwerks-Regeleinrichtung 10 läßt sich in verschiedenen Regelungsarten betreiben, wobei mit dem Sollwertgeber 53 zusätzlich auch die Regelungsart, z. B. Lage-, Kraft-, Druck-, Misch-Regelung wählbar ist. Auch an eine Schlupfregelung ist die Regeleinrichtung 10 anpassbar.

Die Drosselkantenverschiebung mit der elektronischen Steuereinrichtung 56 läßt sich dabei so ausbilden, dass ein zeitlich linearer Übergang von einem Betriebsfall in den anderen möglich ist; durch einen solchen gleitenden Übergang der Drosselkantenverschiebung kann z.B. beim Übergang von Senken nach Drücken erreicht werden, dass der doppelt wirkende Motor 15 nicht stehenbleibt oder ein angebautes Gerät, z.B. ein Pflug, beim ersten Bodenkontakt nicht fallengelassen wird. Um hier den richtigen Zustand des Hubwerkes 11 in der Übergangsphase zu erfassen, kann z.B. abgefragt werden, ob der Druck im Kolbenraum 62 größer als 5 bar ist, der Druck im Ringraum 63 kleiner als 5 bar ist und ob ein Stellsignal Heben oder Senken vorliegt. Mit der dazugehörigen Auswertung des Hubwerks bezüglich seiner Bewegungsrichtung, nämlich oben oder unten, läßt sich dann die Verschiebung der Steuerschieberüberdeckung anpassen. Ebenso läßt sich ein Übergang von Nachgeben nach Heben durch die Drosselkantenverschiebung so gestalten, dass der Fahrer des Traktors diesen Wechsel kaum verspürt.

Die Hubwerks-Regeleinrichtung 10 eignet sich besonders vorteilhaft für eine Auflage-Druckregelung, wobei der Drucksollwert von dem Sollwertgeber 53 vorgegeben wird, während aus dem Druck im Ringraum 63 abzüglich dem Druck im Kolbenraum 62 der tatsächliche Auflagendruck errechenbar ist und mit dem Drucksollwert die Druck-Regelabweichung ergibt, welche dann ausgeregelt werden soll. Besonders günstig lässt sich bei solchen Druckregelungen mit Hilfe der Lageregelung die Überwachung von Lage-Grenzwerten durchführen, um ein Wegdriften eines Anbaugeräts während der Druckregelung sicher zu vermeiden.

Das Regelventil 21 weist ferner als vierte Schaltstellung eine Schwimm- oder Freigangstellung 39 auf, wie sie bei vielen Anwendungsfällen erwünscht ist.

Mit Hilfe der Funktion Drücken läßt sich bei einem Traktor mit angelenktem Pflug besonders bei ungünstigen Bodenverhältnissen ein sehr schnelles Einziehen des Pfluges in den Boden erreichen, so dass die zurückgelegte Wegstrecke des Traktors bis zum Erreichen der Arbeitstiefe des Pfluges erheblich verkürzt wird.

Selbstverständlich sind an der gezeigten Regeleinrichtung Änderungen möglich, ohne vom Gedanken der Erfindung abzuweichen. So lassen sich die Funktionen von elektronischem Regler 49, elektronischer Steuereinrichtung 56 mit Steuerteil 67 auch in einem Gerät vereinen oder in anderer Weise kombinieren, ohne auf die Drosselkantenverschiebung für einen vollen Vier-Quadrantenbetrieb verzichten zu müssen. Auch kann der unterlagerte Lageregelkreis 43 entfallen, wenn die gestellten Anforderungen dies ermöglichen. Anstelle des dargestellten vorgesteuerten Regelventils 21 kann auch ein direkt gesteuertes Regelventil verwendet werden, wobei auch die vierte Schaltstellung Freigang entfallen kann. Neben dem aufgezeigten CC-System läßt sich die Hydraulik auch als OC-System aufbauen, das ebenfalls mit positiver Überdeckung bezüglich der Motorsteuerung arbeitet. Ferner ist es auch möglich, auf die hydraulische Lastkompensation in der Zulaufseite ganz zu verzichten und ablauf- wie zulaufseitig ganz auf eine elektronische Lastkompensation umzustellen. Obwohl die Regeleinrichtung 10 im Zusammenhang mit einem Traktor mit Pflugregelung dargestellt und erläutert wurde, kann sie auch bei anderen landwirtschaftlichen Arbeitsfahrzeugen und Erdbearbeitungsmaschinen eingesetzt werden, bei denen vergleichbare Verhältnisse und Anforderungen auftreten. Weiterhin kann bei ungleichen Flächen des beaufschlagten, doppelt wirkenden Motors bei der Auswertung der Drucksignale eine entsprechende Bewertung mit den jeweils beaufschlagten Flächen vorgenommen werden. Diese Bewertungen sind dem Durchschnittsfachmann geläufig; der Gedanke der Erfindung wird dadurch in gleicher Weise umgesetzt.

## Patentansprüche

1. Elektrohydraulisches Hubwerk für landwirtschaftliche Arbeitsmaschinen mit einer Pumpe (25), mit einem Regelventil (21), das in LS-Technik mit geschlossener Neutralstellung ausgebildet ist und einen in Abhängigkeit von den Signalen eines Sollwertgebers (53) und eines Istwertgebers (47, 48, 51, 52) elektromagnetisch oder elektrohydraulisch aus der Neutralstellung in zwei Richtungen auslenkbaren Steuerschieber (30) aufweist, mit elektronischen Steuermitteln (49, 56,67), von denen unter Heranziehung der Signale des Sollwertgebers (53) und der Signale der Istwertgebers (47,48,51,52) ein Stellsignal (Yₛ) für die Auslenkung des Steuerschiebers 30 aus der Neutralstellung abgebbar ist, mit Mitteln (53), von denen ein die Auslenkung des Steuerschiebers aus der Neutralstellung charakterisierendes Richtungssingal erzeugbar ist, und mit einem Hydrozylinder (15) mit einem Druckraum(62), der von der Pumpe (25) über das Regelventil (21) mit Druckmittel beaufschlagbar und über das Regelventil (21) zum Tank (28) entlastbar ist,
**dadurch gekennzeichnet,**
**dass** der Hydrozylinder (15) doppeltwirkend ist und neben dem ersten Druckraum (62) einen zweiten Druckraum (63) aufweist, die beide über den Steuerschieber (30) des Regelventils (21) und über zwei Zylinderleitungen (16, 17) mit Druckmittel beaufschlagbar und zum Tank (28) entlastbar sind,
**dass** der Steuerschieber (30) des Regelventils (21) positive Überdeckung und vier Steuerkanten (32 bis 35) aufweist, von denen eine erste Steuerkante (32) dem Zulauf von Druckmittel zum ersten Druckraum (62), eine zweite Steuerkante (33) dem Zulauf von Druckmittel zum zweiten Druckraum (63), eine dritte Steuerkante (34) dem Ablauf von Druckmittel aus dem ersten Druckraum (62) und eine vierte Steuerkante (35) dem Ablauf von Druckmittel aus dem zweiten Druckraum (62) dient,
**dass** von einem ersten elektrohydraulischen Drucksensor (47) der Druck in der einen Zylinderleitung (16) und von einem zweiten elektrohydraulischen Drucksensor (48) der Druck in der anderen Zylinderleitung (17) erfaßbar ist,
und **dass** von den elektronischen Steuermitteln (49, 56, 67) in Abhängigkeit von dem sich durch die Drucksignale (p_{A}, p_{B}) und das Richtungssignal für das Regelventil (21) ergebenden Betriebsfall das Regelventil (21) derart ansteuerbar ist, dass mit der dem jeweiligen Betriebsfall eineindeutig zugeordneten Steuerkante (32 bis 35) ein Druckmittelstrom steuerbar ist.

2. Elektrohydraulisches Hubwerk nach Anspruch 1, **dadurch gekennzeichnet, dass** mit den elektronischen Steuermitteln (49, 56, 67) abhängig vom jeweiligen Betriebsfall jede der vier Steuerkanten (32 bis 35) des Regelventils (21) in eine Ausgangsstellung bringbar ist, aus der heraus die Steuerung des Druckmittelstroms erfolgt.

3. Elektrohydraulisches Hubwerk nach Anspruch 1 oder 2, **dadurch gekennzeichnet, dass** als Istwertgeber ein die Lage des Hubwerks (11) erfassender Lagesensor (51) vorgesehen ist, dessen Signale einem Regler (49) zuführbar sind.

4. Elektrohydraulisches Hubwerk nach Anspruch 3, **dadurch gekennzeichnet, dass** bei einer Druckregelung der Regler (49) mit Hilfe des Lagesensors (51) eine Grenzwertüberwachung übernimmt.

5. Elektrohydraulisches Hubwerk nach einem der Ansprüche 1 bis 4, **dadurch gekennzeichnet, dass** ein eine Kraft im Hubwerk (11) erfassender Kraftsensor (52) vorgesehen ist, dessen Signale einem Regler (49) zuführbar sind, um das Hubwerk (11) in einem Kraftregelkreis zu betreiben.

6. Elektrohydraulisches Hubwerk nach einem der Ansprüche 1 bis 5, **dadurch gekennzeichnet, dass** für eine elektronische Lastkompensation am Regelventil (21) in den elektronischen Steuermitteln (56, 67) zur Drosselkantenverstellung die Ventilkennlinien des Regelventils (21) abgelegt sind.

7. Elektrohydraulisches Hubwerk nach einem der Ansprüche 1 bis 6, **dadurch gekennzeichnet, dass** dem Regelventil (21) zuflußseitig eine hydraulisch arbeitende Druckwaage (29) vorgeschaltet ist.

8. Elektrohydraulisches Hubwerk nach einem der Ansprüche 1 bis 7, **dadurch gekennzeichnet, dass** das Regelventil (21) einen Lageaufnehmer (42) aufweist, mit dem es in einen unterlagerten Lageregelkreis (43, 44) geschaltet ist.

9. Elektrohydraulisches Hubwerk nach einem der Ansprüche 1 bis 8, **dadurch gekennzeichnet, dass** das Regelventil (21) eine vierte Schaltstellung (39) aufweist, die insbesondere als Freigangstellung ausgebildet ist.

10. Elektrohydraulisches Hubwerk nach einem der Ansprüche 1 bis 9, **dadurch gekennzeichnet, dass** bei Vorgabe eines Auflagedrucks durch den Sollwertgeber (53) der Istwert des Auflagedrucks aus dem mit der zugeordneten Wirkfläche bewerteten Druck in einem Ringraum (63) des Hydrozylinders (15) abzüglich dem mit der zugeordneten Wirkfläche bewerteten Druck im Kolbenraum (62) des Hydrozylinders (15) errechnet wird.

11. Elektrohydraulisches Hubwerk nach einem vorhergehenden Anspruch, **dadurch gekennzeichnet, dass** die ablaufseitigen Steuerkanten(34, 35) mit einer Ablaufvoreilung ausgebildet sind.

## Claims

1. Electrohydraulic lifting appliance for agricultural working machines, with a pump (25), with a regulating valve (21) which is designed in the load-sensing technique with a closed neutral position and has a control slide (30) deflectable out of the neutral position in two directions electromagnetically or electrohydraulically as a function of the signals from a desired-value transmitter (53) and from an actual-value transmitter (47, 48, 51, 52), with electronic control means (49, 56, 67), which, using the signals from the desired-value generator (53) and the signals from the actual-value generator (47, 48, 51, 52), can emit an actuating signal (yₛ) for the deflection of the control slide out of the neutral position, with means (53), by which a direction signal characterizing the deflection of the control slide out of the neutral position can be generated, and with a hydraulic cylinder (15) having a pressure space (62) which can be acted upon which pressure medium by the pump (25) via the regulating valve (21) and can be relieved to the tank (28) via the regulating valve (21), **characterized in that** the hydraulic cylinder (15) is double-acting and has a second pressure space (63) in addition to the first pressure space (62), which can both be acted upon with pressure medium and can be relieved to the tank (28) via the control slide (30) of the regulating valve (21) and via two cylinder lines (16, 17), **in that** the control slide (30) of the regulating valve (21) has a positive overlap and four control edges (32 to 35), of which a first control edge (32) serves for the inflow of pressure medium to the first pressure space (62), a second control edge (33) serves for the inflow of pressure medium to the second pressure space (63), a third control edge (34) serves for the outflow of pressure medium from the first pressure space (62) and a fourth control edge (35) serves for the outflow of pressure medium from the second pressure space (62), **in that** the pressure in one cylinder line (16) can be detected by a first electrohydraulic pressure sensor (47) and the pressure in the other cylinder line (17) can be detected by a second electrohydraulic pressure sensor (48), and **in that** the regulating valve (21) can be activated by the electronic control means (49, 56, 67) as a function of the operating situation occurring as a result of the pressure signals (p_{A}, p_{B}) and the direction signal for the regulating valve (21), in such a way that a pressure-medium stream can be controlled by means of the control edge (32 to 35) assigned unequivocally to the respective operating situation.

2. Electrohydraulic lifting appliance according to Claim 1, **characterized in that** each of the four control edges (32 to 35) of the regulating valve (21) can be brought by the electronic control means (49, 56, 67), as a function of the respective operating situation, into an initial position out of which the control of the pressure-medium stream takes place.

3. Electrohydraulic lifting appliance according to Claim 1 or 2, **characterized in that** the actual-value transmitter provided is a position sensor (51) which detects the position of the lifting appliance (11) and the signals of which can be supplied to a controller (49).

4. Electrohydraulic lifting appliance according to Claim 3, **characterized in that**, in the event of pressure regulation, the controller (49) assumes limit-value monitoring with the aid of the position sensor (51).

5. Electrohydraulic lifting appliance according to one of Claims 1 to 4, **characterized in that** a force sensor (52) detecting a force in the lifting appliance (11) is provided, the signals of which can be supplied to a controller (49) in order to operate the lifting appliance (11) in a force control loop.

6. Electrohydraulic lifting appliance according to one of Claims 1 to 5, **characterized in that**, for electronic load compensation of the regulating valve (21), the valve characteristic curves of the regulating valve (21) are filed in the electronic control means (56, 67) for throttle-edge adjustment.

7. Electrohydraulic lifting appliance according to one of Claims 1 to 6, **characterized in that** the regulating valve (21) is preceded on the inflow side by a hydraulically operating pressure balance (29).

8. Electrohydraulic lifting appliance according to one of Claims 1 to 7, **characterized in that** the regulating valve (21) has a position transducer (42), by means of which it is switched into a subordinate position control loop (43, 44).

9. Electrohydraulic lifting appliance according to one of Claims 1 to 8, **characterized in that** the regulating valve (21) has a fourth switching position (39) which is designed, in particular, as a free-floating position.

10. Electrohydraulic lifting appliance according to one of Claims 1 to 9, **characterized in that**, with a bearing pressure being preset by means of the desired-value transmitter (53), the actual value of the bearing pressure is calculated from the pressure, evaluated by means of the assigned active area, in an annular space (63) of the hydraulic cylinder (15), minus the pressure, evaluated by means of the assigned active area, in the piston space (62) of the hydraulic cylinder (15).

11. Electrohydraulic lifting appliance according to a preceding claim, **characterized in that** the outflow-side control edges (34, 35) are designed with an outflow lead.

## Revendications

1. Appareil électrohydraulique de levage pour des machines agricoles comprenant
- une pompe (25),
- une soupape de régulation (21) réalisée selon la technique LS avec une position neutre fermée et qui présente en fonction des signaux donnés par un indicateur de valeur de consigne (53) et d'un indicateur de valeur réelle (47, 48, 51, 52), des tiroirs de commande (30) qui peuvent, électromagnétiquement ou électrohydrauliquement, se déplacer dans deux sens à partir de la position neutre,
- des moyens électroniques de commande (49, 56, 67) qui peuvent, à partir des signaux de l'indicateur de valeur de consigne (53) et des signaux de l'indicateur de valeur réelle (47, 48, 51, 52), délivrer un signal de commande (ys) pour déplacer le tiroir de commande à partir de sa position neutre,
- des moyens (53) permettant de produire un signal de sens caractérisant le déplacement du tiroir de commande à partir de sa position neutre,
- un vérin hydraulique (15) avec une chambre de pression (62) qui peut être actionnée par un fluide sous pression provenant de la pompe (25) à travers la soupape de régulation (26) et qui peut être déchargée par cette soupape en direction d'un réservoir (28),
**caractérisé en ce que**
- le vérin hydraulique (15) est à double effet et présente, en plus de la première chambre de pression (62) une seconde chambre de pression (63), ces deux chambres pouvant être actionnées par le fluide sous pression, par l'intermédiaire du tiroir de commande (30) de la soupape de régulation (21) et de deux conduites de vérin (16, 17) et également être déchargées en direction du réservoir (28),
- le tiroir de commande (30) de la soupape de régulation (21) présente une couverture positive et quatre arêtes de commande (32 à 35), dont la première (32) sert à amener le fluide de pression à la chambre de pression (62), la deuxième (33) sert à amener le fluide de pression à la seconde chambre de pression (63), tandis que la troisième arête de commande (34) sert à évacuer le fluide de pression de la première chambre de pression (62) et la quatrième arête de commande (35) à évacuer le fluide sous pression de la seconde chambre de pression (63),
- un premier capteur électrohydraulique de pression (47) permet de saisir la pression dans une conduite de vérin (16), tandis qu'un second capteur électrohydraulique de pression (48) permet de saisir la pression dans l'autre conduite de vérin (17),
- le cas de fonctionnement de la soupape de régulation (21) que donnent les signaux de pression (p_{A}, p_{B}) ainsi que le signal de sens de cette soupape permet d'exciter celle-ci de manière qu'un courant de fluide sous pression se trouve commandé clairement au moyen de l'arête de commande (32 à 35) associée au cas de fonctionnement correspondant.

2. Appareil électrohydraulique de levage selon la revendication 1,
**caractérisé en ce qu'**
à l'aide des moyens électroniques de commande (49, 56, 67), chacune des quatre arêtes de commande (32 à 35) de la soupape de régulation (21) peut être amenée, dans le cas de fonctionnement correspondant, à une position initiale à partir de laquelle a lieu la commande du courant de fluide sous pression.

3. Appareil électrohydraulique de levage selon la revendication 1 ou 2,
**caractérisé en ce qu'**
il est prévu comme indicateur de valeur réelle un capteur de position (51) qui saisit la position du dispositif de levage (11) et dont les signaux peuvent être envoyés à un régulateur (49).

4. Appareil électrohydraulique de levage selon la revendication 3,
**caractérisé en ce que**
pour la régulation de pression, le régulateur (49) effectue une surveillance des valeurs limites à l'aide du capteur de position (51).

5. Appareil électrohydraulique de levage selon une des revendications 1 à 4,
**caractérisé en ce qu'**
il est prévu un capteur de force (52) qui saisit une force dans le dispositif de levage (11), et dont les signaux peuvent être envoyés à un régulateur (49) pour faire fonctionner le dispositif de levage (11) dans un circuit de régulation de force.

6. Appareil électrohydraulique de levage selon une des revendications 1 à 5,
**caractérisé en ce que**
pour assurer une compensation électronique de la charge dans la soupape de régulation (21), les caractéristiques de cette soupape sont déposées dans des moyens électroniques de commande (56, 57) du déplacement des arêtes d'étranglement.

7. Appareil électrohydraulique de levage selon une des revendications 1 à 6,
**caractérisé en ce qu'**
une balance de pression (29) à fonctionnement hydraulique est disposée en amont de la soupape de régulation (21) du côté de l'amenée du fluide.

8. Appareil électrohydraulique de levage selon une des revendications 1 à 7,
**caractérisé en ce que**
la soupape de régulation (21) présente un récepteur de position (42) par lequel elle est connectée à un circuit de régulation de position en cascade (43, 44).

9. Appareil électrohydraulique de levage selon une des revendications 1 à 8,
**caractérisé en ce que**
la soupape de régulation (21) présente une quatrième position de commutation (39) réalisée notamment sous la forme d'une position de suspension libre.

10. Appareil électrohydraulique de levage selon une des revendications 1 à 9,
**caractérisé en ce que**
lors de la prédéfinition d'une pression d'application par l'indicateur de valeur de consigne (53), la valeur réelle de cette pression est calculée à partir de la pression évaluée en fonction de la surface active associée dans une chambre annulaire (63) du vérin (15), déduction faite de la pression évaluée en fonction de la surface active associée dans la chambre de piston (62) du vérin (15).

11. Appareil électrohydraulique de levage selon une des revendications précédentes,
**caractérisé en ce que**
les arêtes de commande (34, 35) situées du côté de l'évacuation sont réalisées avec une avance d'évacuation.
